# EUROPEAN PATENT SPECIFICATION

(11) **EP 3 426 909 B1**
(45) Date of publication and mention of the grant of the patent: **05.05.2021**
(21) Application number: 17764302.0
(22) Date of filing: 16.03.2017
(51) Int. Cl.: F02M 51/04, F02M 59/20, F02M 61/04, F02M 63/04, F02M 59/36, F02M 59/46, F02M 59/48

(54) **DIRECT MAGNETICALLY CONTROLLED INLET VALVE FOR FUEL PUMP**
DIREKT MAGNETISCH GESTEUERTES EINLASSVENTIL FÜR EINE KRAFTSTOFFPUMPE
VANNE D'ENTRÉE À COMMANDE MAGNÉTIQUE DIRECTE POUR POMPE À CARBURANT

(30) Priority: 20.01.2017 US 201715411142
(43) Date of publication of application: 16.01.2019
(73) Proprietor: Stanadyne LLC, Windsor, CT 06095 (US)
(72) Inventor: LUCAS, Robert, G., Ellington Connecticut 06029 (US)
(74) Representative: Glawe, Delfs, Moll
(86) International application number: PCT/US2017/022735
(87) International publication number: WO 2017/156552

(56) References cited:
- EP-A1- 2 535 553
- WO-A1-2015/106935
- DE-A1-102013 210 792
- US-A- 4 308 475
- US-A1- 2006 159 573
- US-A1- 2006 222 518
- US-A1- 2009 120 412
- US-A1- 2014 377 109
- US-B1- 6 840 229

## Description

### Background

The present invention relates to high pressure fuel pumps, and particularly to the inlet valve for feeding low pressure fuel to the high pressure pumping chamber.

Single piston and multi-piston high pressure common rail fuel pumps have been implemented to provide the high fuel pressures required by modern direct injected gasoline and diesel engines. These engine mounted pumps are volume controlled to minimize parasitic losses while maintaining rail pressure. Volume control is achieved either by inlet throttling using a magnetic proportional control valve, or indirect digital control of the inlet valve by a magnetic actuator. Either execution requires that the pump be controlled by an electrical signal from the engine ECU.

Because the indirect inlet valve actuator control requires a separate actuator for each pump piston, it has become common for multi-piston pumps to use a single inlet throttling proportional valve, in order to avoid a high part count and cost. Many modern single piston pumps use an indirect inlet valve actuator with a separate magnetically controlled armature assembly. These devices typically employ three separate components: inlet valve, magnetic armature, and the intervening engaging or connecting member. Different variants of this concept can be seen in U.S. Patent Nos. 6526947, 7513240, 6116870, and 7819637. Due to the high complexity and precision of these devices, they typically account for at least 1/3 of the cost of a single piston pump. These digital type devices also suffer from high reciprocating mass and noise due to impact of the armature and valve assemblies during energizing and de-energizing events.

As safety requirements dictate, there is a need to assure that in the event of a collision, the collapsing engine bay does not damage the inlet valve to the extent that fuel leaks from the pump, presenting a fire hazard. A vulnerable part of the pump is the electromagnetic actuator for the inlet control valve.

Document US 2006/0159573 A1 describes a high pressure pump that pressurizes fluid using a plunger. The pump is provided with an arrangement where a solenoid is at least partially inside the pump housing body in an accommodation hole or recession.

### Summary

The invention is defined by the claims. Embodiments of this disclosure which do not fall under the scope of the claims only serve for explanatory purposes and do not form part of the invention.

The primary purpose of the present invention is to reduce the cost and noise of a magnetically controlled inlet valve actuator for fuel pumps. Additionally, the present invention may reduce the risk of fuel leakage from the inlet control valve in the event of damage to the electromagnetic actuator for the inlet control valve. This is achieved by hydraulically isolating an actuation module containing the electromagnetic coil from a delivery module containing the hydraulic flow paths, and providing a breakaway connection between the actuation module and the delivery module.

The improved inlet valve assembly and associated pump, direct a magnetic flux path such that a magnetic force is directly applied to the inlet valve member when a coil is energized. As a result, direct actuation of the inlet valve is achieved, thereby eliminating the separate armature and armature to inlet valve connecting member, and reducing cost. By eliminating the separate armature and connecting member, reciprocating masses are reduced. Mass reduction minimizes impact generated noise and reduces response time for better controllability and lower power consumption.

The disclosed embodiment of an fuel inlet valve assembly comprises a valve assembly inflow path and valve assembly outflow path; a magnetic valve member situated in an intermediate flow path fluidly linking the inflow path and the outflow path; a magnetic pole adjacent the valve member; and a selectively energizable coil for generating a magnetic flux directly magnetically coupling the pole and the valve member; whereby the valve member opens and closes fluid communication between the inflow path and the outflow path in response to the energized state of the coil.

The disclosed fuel pump embodiment comprises a pump housing; a fuel inlet connection on the housing for delivering feed fuel into an inlet flow path in the housing; a pumping chamber and associated pumping mechanism in the housing for receiving feed fuel from inlet flow path through an inlet valve assembly, increasing the fuel pressure, and delivering pumped fuel to a discharge flow path; an outlet connection on the housing, in fluid communication with the discharge flow path through an outlet valve; wherein the inlet valve assembly includes a valve member directly magnetically coupled to a coil, whereby the coil is selectively energized to generate a magnetic flux path directly through the inlet valve member, thereby applying a magnetic force to the valve member to selectively open and close the valve member against a sealing surface in the inlet flow path.

Preferably, the inlet valve assembly includes a central magnetic pole coaxially situated within and projecting from the coil; a portion of the inlet flow path passes inward through the projection of the pole into a central bore that opens at the end of the projection; the sealing surface is integrally formed in the pole around the opening of the central bore; and the inlet valve member is a flat plate having a periphery with a rim that provide magnetic flux paths transversely through the valve member and notches that form a portion of the inlet flow path when the valve member is open.

The actuation module may be attached to the lower portion of the delivery module such that it projects entirely external to the housing. The snap off or breakaway connection preserves the hydraulic integrity of the pump.

In one embodiment, the inlet valve comprises a fuel delivery module mountable in the pump housing, including an inflow passage for receiving feed fuel from an inlet port, a delivery passage for delivering feed fuel to the pumping chamber, a valve seat between the inflow passage and the delivery passage, and a valve member movable between a first position against the seat to close fuel flow to the delivery passage and a second position to open fuel flow to the delivery passage. An actuation module is attached to the delivery module, including an electromagnetic coil assembly that is operatively associated with the valve member for moving the valve member between the first and second positions. The actuation module is hydraulically isolated from the fuel delivery module, so that even if the actuation module is completely severed from the pump, no fuel will leak out of the control valve.

Another embodiment is directed to a fuel pump comprising a housing, an inlet port for receiving low pressure feed fuel, a pumping chamber within the housing for pressurizing the feed fuel, an outlet port for discharging the pressurized fuel, a fuel delivery module, and an actuator module. The fuel delivery module is mounted in the housing, and includes a valve member movable between a first position and a second position to control infeed flow to the pumping chamber. An actuation module is attached to at least one of the delivery module and housing, including an electromagnetic coil assembly that is operatively associated with the valve member for moving the valve member between the first and second positions. The actuation module is hydraulically isolated from the fuel delivery module.

The actuation module preferably attached to the delivery module with a snap off connection, thereby serving as a sacrificial body to minimize collision forces transferred to the delivery module, which contains fuel. For example, the actuation module can be tack welded to the delivery module.

The present invention can be incorporated into many kinds of inlet control valves, but is most easily incorporated into the kind of magnetically actuated valve described in said co-pending application. According to the invention, the actuation module has a first magnetic pole, a surrounding coil, and a magnetically conductive outer jacket. The valve member in the delivery module is ferromagnetic, and the lower portion of the delivery module defines a second magnetic pole magnetically coupled to the first magnetic pole. Portions of the housing, the actuation module, and the delivery module define a magnetic circuit, whereby actuation of the electromagnetic coil applies or removes a force to move the valve member between the first and second positions. The delivery module is internal to the housing; the lower portion is hydraulically sealed against the housing. The actuation module is attached to the lower portion of the delivery module and projects entirely external to the housing, so that it can be snapped off while the housing protects the delivery module.

### Brief Description of the Drawing

A representative embodiment will be described in detail with reference to the accompanying drawings, wherein:
Figure 1 is a section view of a single piston common rail fuel pump suitable for incorporating the invention;
Figure 2 is a cross-sectional view of the pump of Figure 1, in a different plane, showing an embodiment of the inlet valve assembly according to the invention;
Figure 3 is an enlarged section view of the inlet valve assembly of Figure 2;
Figure 4 is a section view through the pump, orthogonal to the view of Figure 3, showing the inlet fuel flowpath from the inlet fitting to the inlet valve assembly;
Figue 5 is an oblique view of the valve member, showing a periphery that includes a rim portion for accommodating transverse flux paths and notches for accommodating hydraulic flow;
Figure 6 is a section view of a control valve of the type described with respect to Figures 1-5, modified to incorporate a peferred embodiment of the present invention; and
Figure 7 is a more detailed view of the control valve of figure 6.

### Detailed Description

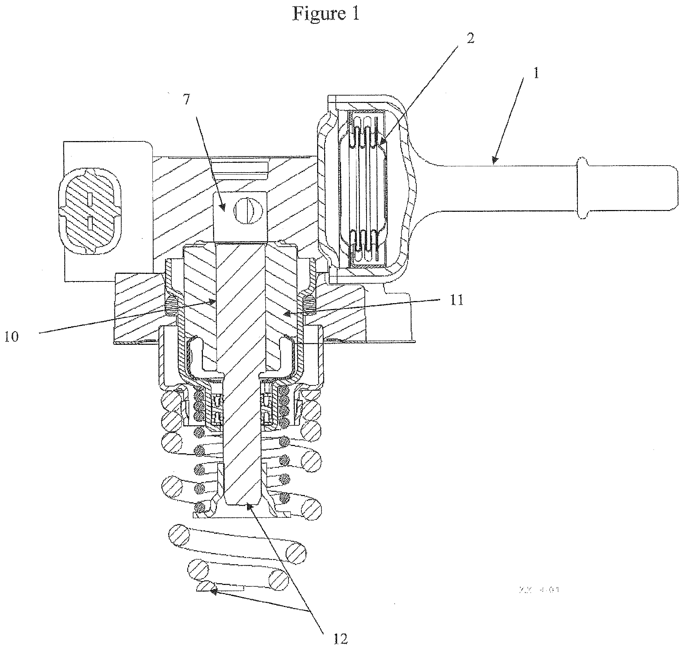

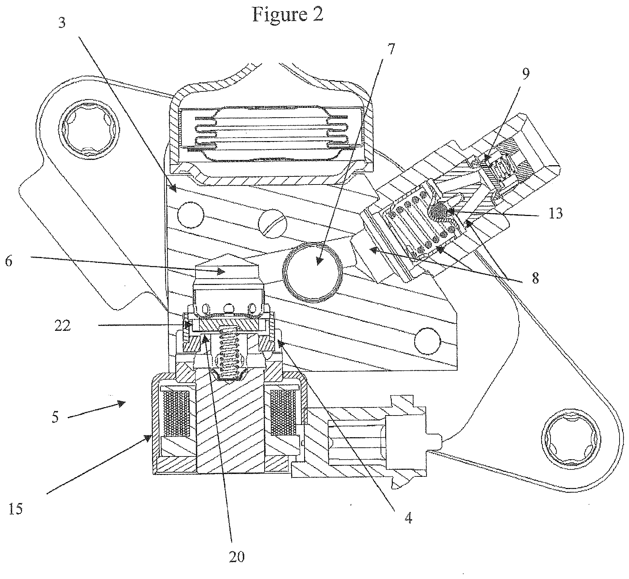

The basic functional aspects are evident from Figures 1 and 2. During the pump charging phase when piston 10 is reciprocally moving away from pumping chamber 7, low pressure fuel enters the pump through inlet fitting 1, passes around the pressure damper 2 and then into the pump housing 3 and a series of low pressure passages. It then enters into inlet annulus 4 assembly for the direct magnetically controlled inlet valve assembly 5, passes around the direct magnetically controlled inlet valve 22 through the passage 6 and into the pumping chamber 7. Upon completion of the charging phase the pumping camshaft acts upon a tappet 12, urging the piston 10, to slide in piston sleeve 11. When the direct magnetically controlled inlet valve assembly 5 is energized with an electrical current to coil assembly 15, a magnetic force is generated urging the inlet valve 22 to close and seal at surface 20, thereby enabling fuel trapped in the pumping chamber 7 to compress and build pressure. When sufficient pressure is built, the outlet valve 9 will open, allowing high pressure discharge flow to pass from the pumping chamber through the high pressure passages 8 past the outlet valve 9 and into the high pressure line, rail, and finally to feed the fuel injectors. The pump is equipped with a relief valve 13 in case there is a system malfunction.

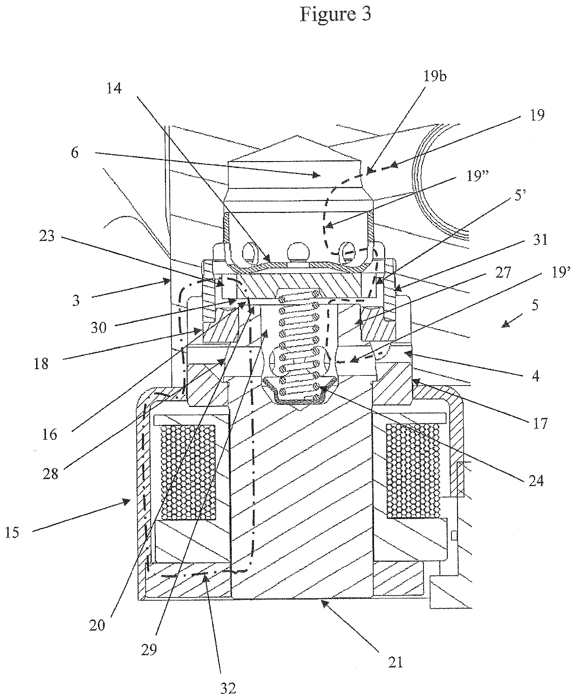

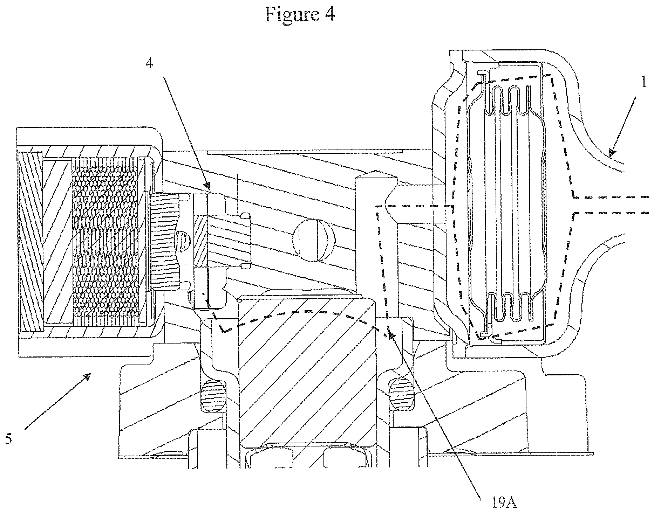

Figures 3 and 4 provide more detail into the functional aspects of the preferred embodiment. When the direct magnetically controlled inlet valve assembly 5 is de-energized during the charging phase of the pump, valve member 22 opens and fuel is allowed to pass along inlet fluid flow path circuit 19. During the charging phase fuel flows along path portion 19a from inlet fitting 1 to inlet valve inlet annulus 4, through the inlet valve 5, then along path portion 19b through passage 6 toward the pumping chamber. In the disclosed embodiment, the valve assembly 5 functions as both an inlet check valve and a quantity metering valve. During the charging phase, the downward movement of the pumping piston fills the pumping chamber with low pressure fuel from the inlet circuit 19. During the high pressure pumping phase of the piston, highly pressurized fuel cannot be permitted to backflow through passage 19' to the inlet fitting. During this phase the valve member 22 is closed against sealing surface 20, due to both the energization of the coil and the high pressure fuel acting on the top surface of the valve member 22. In order to control the quantity (volume) pumped at high pressure, the energization of the coil is timed to close the valve member 22 corresponding to a certain position on the upward stroke of the cam/piston. Prior to the valve closure, when the piston is moving upward, low pressure is being pushed backwards from the pumping chamber past the inlet valve 22 all the way to the pressure dampers 2 and inlet fitting 1. The dampers absorb much of the pressure spike associated with this backflow. This can be considered a "pumping bypass" phase of the overall piston reciprocation cycle. The overall cycle thus comprises a charging phase, a pumping bypass phase, and a high pressure pumping phase.

In a known manner, the electromagnetic coil assembly 15 is analogous to a solenoid, with a multi-winding coil situated around an axially extending, ferromagnetic cylinder or rod 21 (hereinafter referred to as magnetic pole). One end of the pole projects fronm the coil. When an electrical current is passed through the coil assy 15, a magnetic field is generated, which flows about the magnetic circuit along magnetic flux lines across radial air gap 23, generating an axial force onto the face of the valve 22 via the varying magnetic air gap 16. When the magnetic force exceeds the force of the inlet valve return spring 24, the valve 22 will close against valve sealing surface 20. The magnetic pole 21 integrally defines sealing surface 20 and is also a part of the magnetic flux path 32. Preferably, an inlet valve stop 14 aids in positioning of the valve 22 for accurate stroke control.

First magnetic break 17 and second magnetic break 18 surround the sealing face 20 to direct the correct magnetic flow path and avoid a magnetic short circuit. Both breaks 17 and 18 should be fabricated from a non-magnetic material and for best performance valve stop 14 should also be fabricated from a non-magnetic material. Breaks 17 and 18 surround the projecting portion of the magnetic pole to prevent magnetic flux from travelling radially to the housing from the pole and thereby short-circuiting the valve member 22. The breaks therby assure that the flux circuit passes through the coils, the magnet pole, through the sealing surface 20 and air gap 16, through the inlet valve member 22, across radial air gap 23, through conductive ring 31 and pump housing 3, back to the coil 15. In an alternative embodiment, the sealing surface 20' is not unitary with the pole 21; it could be integrated with the second magnetic break 18.

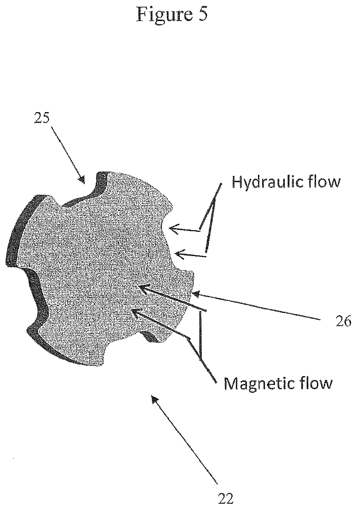

Figure 5 shows additional features which contribute to efficient performance of the disclosed inlet valve assembly. The periphery of the valve member 22 includes a plurality of magnetic flow rim sections or lobes 26 which control the radial air gap 23, and a plurality of hydraulic flow notches 25 which facilitate adequate fuel flow along fluid flow path 19 when the valve opens. The lobes have a rim diameter (max OD) and the notches have a base diameter (min OD). The base diameter is larger than the ID of the valve sealing surface 20, so when the valve 22 is closed during the pumping stroke no flow can pass from pumping chamber across the valve 22 back to the inlet annulus 4'. The min OD should also be at approximately the same diameter as the diameter of the sealing surface 20 to allow sufficient magnetic force across magnetic air gap 16. When valve 22 opens during the charging stroke, fuel flows from the inlet annulus 4' through the notches and through the radial air gap 23. The notches are provided because the air gap 23 must be minimized to maintain sufficient magnetic force, but as a result the annular flow area would otherwise be too small to permit the necessary inlet flow rate to the pumping chamber.

As a stand-alone unit, the disclosed fuel inlet valve assembly 5 shown in Figures 3 and 4 can be considered as providing a controlled intermediate flow path within the overall pump inlet flow path 19. A magnetic valve member 22 is situated within the intermediate flow path. The intermediate flow path comprises a valve assembly inflow path 19' fluidly connected to inlet path 19a and starting at inlet annulus 4, and valve assembly outflow path 19" starting downstream of the valve member 22 and ending at flow path 19b into passage 6. The magnetic pole 21 is a rod or cylinder or the like coaxially situated within the magnetic coil 15 and includes one end 27 projecting from the coil 15. A portion 19' of the inflow path passes through transverse holes 28 in the projection of the pole and into a central bore 29, which opens through a sealing face 20 integrally formed at the end of the projection. The inlet valve member 22 is a flat plate that constitutes an armature in relation to the coil 15 and has a sealing face 30 that confronts the sealing surface 20 through a magnetic air gap 16. When lifted off the sealing surface 20, the valve member 22 opens fluid communication from the inflow path 19' (upstream of the sealing surface 20) to the outflow path 19" (downstream of the sealing surface). The valve member 22 includes a periphery with a rim 26 that provides magnetic flux paths transversely through the valve member and notches 25 that form another portion of the valve assembly outflow flow path when the valve member is open.

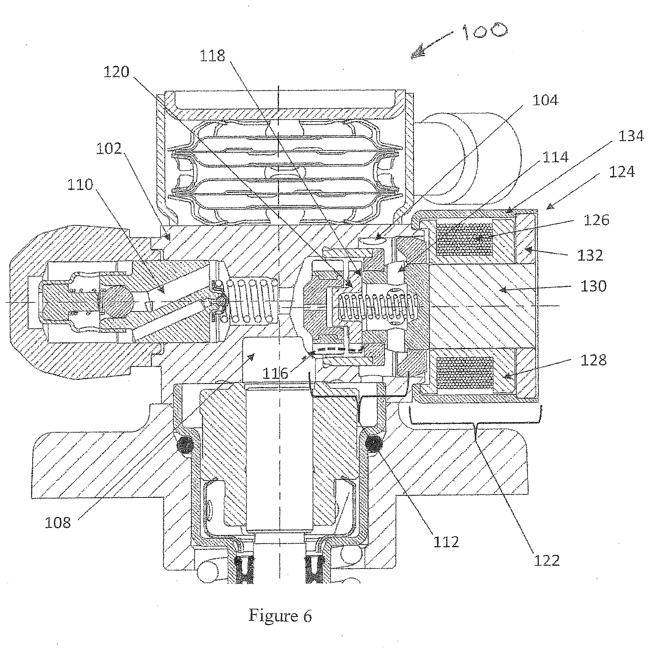

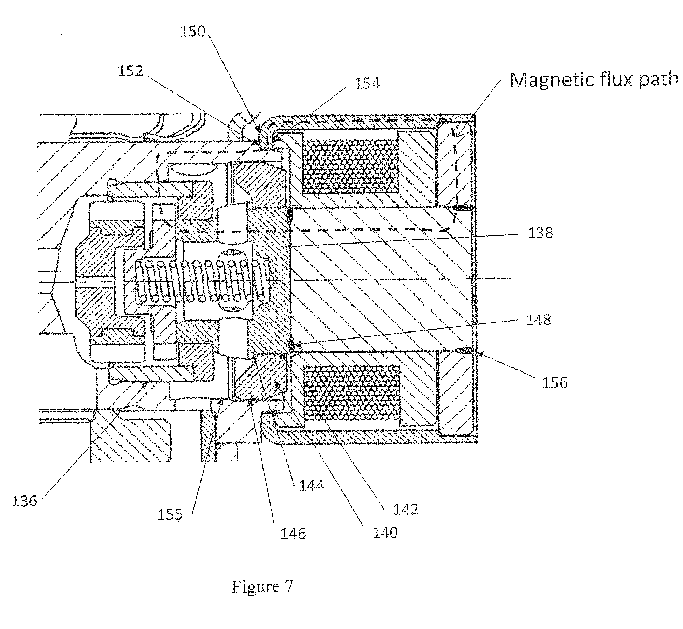

Figures 6 and 7 show a pump embodiment 100 of the present invention that improves upon the inlet valve shown in Figures 1-5, wherein the inlet valve features a distinct actuator module containing the coil assembly and a distinct delivery module containing all the hydraulic flow paths of the overall inlet valve.

The pump comprises a housing 102, an inlet port 104 for receiving low pressure feed fuel, a pumping chamber 108 within the housing for pressurizing the feed fuel, and an outlet port 110 for discharging the pressurized fuel. A fuel delivery module 112 is mounted in the housing, including an inflow passage 114 for receiving feed fuel from the inlet port, a delivery passage 116 for delivering feed fuel to the pumping chamber, a valve seat 118 between the inflow passage and the delivery passage, and a valve member 120 movable between a first position against the seat whereby the valve member closes fuel flow to the delivery passage and a second position away from the seat whereby the valve member retracts from the seat to open fuel flow to the delivery passage. An actuation module 122 is attached to at least one of the delivery module 112 and housing 102, and includes an electromagnetic coil 124 assembly that is operatively associated with the valve member for moving the valve member between the first and second positions. The actuation module is hydraulically isolated from the fuel delivery module.

The actuation module 122 has a coil 126 supported by a coil housing 128, a central pole 130 within the coil housing, a base 132, and a conductive jacket 134 that surrounds the coil housing and the base.

The delivery module 112 is internal to the housing 102 and the actuation module 122 is external to the housing. The delivery module is mounted and radially sealed such as at 136 in a profiled bore 155 in the housing. An axially outer portion 138 constitutes a pole that coaxially confronts the central pole 130 of the actuation module, and an outer seal ring 140 with a radially inner surface that aligns and seals the pole via a lip 142 and shoulder 144 and a radially outer surface that sealingly bears against the wall of the housing bore at 146 as a press-fit or weld. Together the pole and ring of the delivery module and the bore wall of the housing hydraulically isolate the hydraulic internals of the delivery module 112 from the actuation module 122.

In a manner readily derivable from Figures 1-5, portions of the housing 102, the actuation module 122, and the delivery module 112 define a magnetic circuit, whereby actuation of the electromagnetic coil applies or removes a force to move the valve member 120 between the first and second positions.

The actuation module 122 is attached to the axially outer portion 138 of the delivery module 112 such that it projects entirely external to the housing 102. The actuation module 122 is attached to the delivery module 112 with a snap off or breakaway connection. For example, the pole 130 of the actuation module is tack welded 148 to pole 138 of the delivery module. The jacket 134 has an upper end including a lip 150 that is captured between a shoulder 152 on the housing and a counter shoulder 154 on the coil housing. The coil, coil housing, conductive jacket, and base form a unit that is fastened to the central pole 130 with a weld 156 or the like.

## Claims

1. A fuel pump comprising:
a housing (102);
an inlet port (104) for receiving low pressure feed fuel;
a pumping chamber (108) within the housing for pressurizing the feed fuel;
an outlet port (110) for discharging the feed fuel after pressurization;
a fuel delivery module (112) mounted in the housing, including an inflow passage (114) for receiving feed fuel from the inlet port, a delivery passage (116) for delivering feed fuel to the pumping chamber, a valve seat (118) between the inflow passage (114) and the delivery passage (116), and a valve member (120) movable between a first position against the seat (118) whereby the valve member (120) closes fuel flow to the delivery passage (116) and a second position away from the seat (118) whereby the valve member (120) retracts from the seat (118) to open fuel flow to the delivery passage (116);
an actuation module (122) attached to at least one of the delivery module (112) and housing (102), including an electromagnetic coil assembly (124) that is operatively associated with the valve member (120) for moving the valve member (120) between the first and second positions;
wherein the actuation module (122) is hydraulically isolated from the fuel delivery module (112),
**characterized in that**
the delivery module (112) is internal to the housing (102) and has a lower portion (138) that is hydraulically sealed (136, 140) against the housing;
the actuation module (122) is attached (148) to the lower portion (138) of the delivery module (112) and projects entirely external to the housing (102);
the actuation module (122) has a first magnetic pole (130), a surrounding coil (126), and a magnetically conductive outer jacket (134);
the lower portion (138) of the delivery module (112) defines a second magnetic pole magnetically coupled to the first magnetic pole (130) and includes said valve seat (118);
the valve member (120) is ferromagnetic; and
the valve member (120) has a sealing face (30) directly magnetically coupled to the electromagnetic coil (126) through the first and second magnetic poles (130, 138), whereby the coil (126) is selectively energizable to generate a magnetic flux path directly through the sealing face (30) of the valve member (120) and a sealing surface (20) of the seat (118).

2. The pump of claim 1, wherein
portions of the housing (102), the actuation module (122), and the delivery module (112) define a magnetic circuit;
whereby actuation of the electromagnetic coil (126) applies or removes a force to move the valve member (120) between the first and second positions.

3. The pump of any of claims 1-2, wherein the actuation module (122) is attached to the delivery module (112) with a snap off connection (148).

4. The pump of claim 3, wherein said jacket (134) has an upper end including a lip (150) that is captured between a shoulder (152) on said housing (102) and a counter shoulder (154) on the actuation module (122).

## Patentansprüche

1. Kraftstoffpumpe, umfassend:
ein Gehäuse (102);
einen Einlassanschluss (104) zum Empfangen von Niederdruck-Zufuhrkraftstoff;
eine Pumpkammer (108) innerhalb des Gehäuses zur Druckbeaufschlagung des Zufuhrkraftstoffs;
einen Auslassanschluss (110) zum Ausbringen des Zufuhrkraftstoffs nach der Druckbeaufschlagung;
ein im Gehäuse montiertes Kraftstofffördermodul (112), das einen Zuflusskanal (114) zum Empfangen von Zufuhrkraftstoff aus dem Einlassanschluss, einen Förderkanal (116) zum Fördern von Zufuhrkraftstoff an die Pumpkammer, einen Ventilsitz (118) zwischen dem Zuflusskanal (114) und dem Förderkanal (116) und ein Ventilelement (120), das zwischen einer ersten Stellung gegen den Sitz (118), wodurch das Ventilelement (120) den Kraftstofffluss zum Förderkanal (116) schließt, und einer zweiten Stellung weg von dem Sitz (118), wodurch sich das Ventilelement (120) von dem Sitz (118) zurückzieht, um den Kraftstofffluss zum Förderkanal (116) zu öffnen, bewegbar ist;
ein Betätigungsmodul (122), das an mindestens einem von dem Fördermodul (112) und dem Gehäuse (102) angebracht ist und eine elektromagnetische Spulenanordnung (124) enthält, die dem Ventilelement (120) betriebsfähig zugeordnet ist, um das Ventilelement (120) zwischen der ersten und der zweiten Stellung zu bewegen;
wobei das Betätigungsmodul (122) hydraulisch vom Kraftstofffördermodul (112) getrennt ist,
**dadurch gekennzeichnet, dass**
sich das Fördermodul (112) im Innern des Gehäuses (102) befindet und einen unteren Abschnitt (138) aufweist, der hydraulisch gegen das Gehäuse abgedichtet ist (136, 140);
das Betätigungsmodul (122) am unteren Abschnitt (138) des Fördermoduls (112) befestigt (148) ist und vollständig aus dem Gehäuse (102) herausragt;
das Betätigungsmodul (122) einen ersten Magnetpol (130), eine umgebende Spule (126) und einen magnetisch leitenden Außenmantel (134) aufweist;
der untere Abschnitt (138) des Fördermoduls (112) einen zweiten Magnetpol definiert, der magnetisch mit dem ersten Magnetpol (130) gekoppelt ist und den Ventilsitz (118) enthält;
das Ventilelement (120) ferromagnetisch ist; und
das Ventilelement (120) eine Dichtfläche (30) aufweist, die über den ersten und zweiten Magnetpol (130, 138) direkt magnetisch mit der elektromagnetischen Spule (126) gekoppelt ist, wobei die Spule (126) selektiv erregbar ist, um einen magnetischen Flussweg direkt durch die Dichtfläche (30) des Ventilelements (120) und eine Dichtfläche (20) des Sitzes (118) zu erzeugen.

2. Pumpe gemäß Anspruch 1, wobei
Abschnitte des Gehäuses (102), des Betätigungsmoduls (122) und des Fördermoduls (112) einen Magnetkreis definieren;
wobei die Betätigung der elektromagnetischen Spule (126) eine Kraft anwendet oder aufhebt, um das Ventilelement (120) zwischen der ersten und zweiten Stellung zu bewegen.

3. Pumpe gemäß einem der Ansprüche 1-2, wobei das Betätigungsmodul (122) mit einer Schnappverbindung (148) am Fördermodul (112) befestigt ist.

4. Pumpe gemäß Anspruch 3, wobei der Mantel (134) ein oberes Ende aufweist, das eine Lippe (150) enthält, die zwischen einer Schulter (152) am Gehäuse (102) und einer Gegenschulter (154) am Betätigungsmodul (122) festgehalten wird.

## Revendications

1. Pompe à carburant comportant :
un corps (102) ;
un orifice (104) d'entrée servant à recevoir un carburant d'alimentation à basse pression ;
une chambre (108) de pompage à l'intérieur du corps servant à mettre sous pression le carburant d'alimentation :
un orifice (110) de sortie servant à évacuer le carburant d'alimentation après la mise sous pression ;
un module (112) de distribution de carburant monté dans le corps, comprenant un passage (114) d'écoulement entrant servant à recevoir du carburant d'alimentation en provenance de l'orifice d'entrée, un passage (116) de distribution servant à distribuer du carburant d'alimentation à la chambre de pompage, un siège (118) de soupape entre le passage (114) d'écoulement entrant et le passage (116) de distribution, et un organe (120) de soupape mobile entre une première position contre le siège (118), l'organe (120) de soupape fermant alors l'écoulement de carburant vers le passage (116) de distribution et une seconde position écartée du siège (118), l'organe (120) de soupape se rétractant alors par rapport au siège (118) pour ouvrir l'écoulement de carburant vers le passage (116) de distribution ; un module (122) d'actionnement lié au module (112) de distribution et/ou au corps (102), comprenant un ensemble bobine électromagnétique (124) qui est associé fonctionnellement à l'organe (120) de soupape pour déplacer l'organe (120) de soupape entre les première et seconde positions ;
le module (122) d'actionnement étant isolé hydrauliquement du module (112) de distribution de carburant,
**caractérisé en ce que**
le module (112) de distribution est interne au corps (102) et comprend une partie inférieure (138) qui est scellée hydrauliquement (136, 140) contre le corps ;
le module (122) d'actionnement est lié (148) à la partie inférieure (138) du module (112) de distribution et fait saillie entièrement à l'extérieur du corps (102) ;
le module (122) d'actionnement est doté d'un premier pôle magnétique (130), d'une bobine (126) qui l'entoure, et d'une gaine extérieure (134) magnétiquement conductrice ;
la partie inférieure (138) du module (112) de distribution définit un second pôle magnétique couplé magnétiquement au premier pôle magnétique (130) et comprend ledit siège (118) de soupape ;
l'organe (120) de soupape est ferromagnétique ; et
l'organe (120) de soupape présente une face (30) d'étanchéité directement couplée magnétiquement à la bobine électromagnétique (126) par l'intermédiaire des premier et second pôles magnétiques (130, 138), la bobine (126) pouvant ainsi être alimentée sélectivement pour générer un chemin de flux magnétique directement à travers la face (30) d'étanchéité de l'organe (120) de soupape et une surface (20) d'étanchéité du siège (118).

2. Pompe selon la revendication 1,
des parties du corps (102), du module (122) d'actionnement, et du module (112) de distribution définissant un circuit magnétique ;
l'actionnement de la bobine électromagnétique (126) appliquant ou supprimant ainsi une force de façon à déplacer l'organe (120) de soupape entre les première et seconde positions.

3. Pompe selon l'une quelconque des revendications 1 à 2, le module (122) d'actionnement étant lié au module (112) de distribution à l'aide d'une liaison cassable (148).

4. Pompe selon la revendication 3, ladite gaine (134) présentant une extrémité supérieure comprenant un rebord (150) qui est pris entre un épaulement (152) sur ledit corps (102) et un contre-épaulement (154) sur le module (122) d'actionnement.
